# EUROPEAN PATENT APPLICATION

(11) **EP 2 474 241 A1**
(43) Date of publication of application: **11.07.2012**
(21) Application number: 11380001.5
(22) Date of filing: 05.01.2011
(51) Int. Cl.: A23L 3/365, A47J 36/24

(54) **Apparatus and method for thawing or regenerating frozen foods**

(71) Applicant: Electrodomesticos Taurus S.L., 25790 Oliana (Lleida) (ES)
(72) Inventor: Sancho Pastor, Emilio, 25790 Oliana (Lleida) (ES); Alet Vidal, Josep, 25790 Oliana (Lleida) (ES); Trench Roca, Lluis, 25790 Oliana (Lleida) (ES)
(74) Representative: Torner Lasalle, Elisabet

(57) **Abstract**

The apparatus comprises a container (1) partially filled with a flowable heat-carrying material heated to a predetermined temperature, said container (1) having an opening (1a) through which a frozen food (3) is submerged in said heat-carrying material for allowing heat transfer from the heat-carrying material to said frozen food (3) for defrosting or regenerating it. Said heat-carrying material comprises a solid material (2) with a high heat absorption capacity which is formed by a plurality of discrete elements susceptible to relative movement allowing immersing the frozen food (3) therein and assuring an adaptation of said solid material (2) to the shape of the frozen food (3) by contact. The method comprises using this solid material (2) formed by a plurality of discrete elements as said flowable heat-carrying material.

## Description

### Field of the Art

The present invention relates to an apparatus for defrosting or regenerating frozen foods, "regenerating frozen foods" being understood as heating a pre-prepared and frozen food to a temperature suitable to be served and consumed without the need for subsequent cooking. The apparatus of the present invention is especially useful for regenerating the so-called "fifth range food products", which are dishes that are prepared, packaged and frozen at low temperatures after subjecting them to sanitation processes assuring their salubrious consumption, texture and other original organoleptic qualities.

### Background of the Invention

Patent GB-A-1078593 discloses a method and an apparatus for defrosting foods. The apparatus comprises a tank filled with a hot liquid, such as water or brine, or another equivalent liquid, means for swinging the tank for the purpose of stirring the liquid, and means controlled by thermostat for introducing hot liquid into different sites of the tank for maintaining the liquid in the tank at a desired temperature. The method comprises putting the frozen foods in the hot liquid bath, stirring the hot liquid and maintaining the food in a semi-floating state, allowing them to rotate freely.

One drawback of the mentioned patent GB-A-1078593 is that the boiling temperature of a water-based liquid is around 100°C, and it is a significantly low temperature in comparison to the temperatures recommended for a rapid defrosting or regeneration of foods. Another drawback is that the hot liquid bath produces undesirable vapor seepage to the atmosphere, which means replenishing the evaporated liquid is necessary.

Patent US-A-5368093 discloses a device for defrosting foods comprising a bag filled with a high thermal conductivity fluid which includes a mixture of graphitic carbon particles and water and a plate also made of graphitic carbon. The bag and the plate are first heated, and the food to be defrosted is placed on the plate and covered with the bag which adapts to the shape of the food. The heat of the environment and that of bag and plate is transferred to the food to defrost it. A drawback of this device is that the bag and the plate do not assure complete contact and envelopment of the food to be defrosted due to the low adaptability of the bag and plate to the shape of the food, and the device may not be efficient enough for food regeneration.

Patent US-A-4777930 describes a bag made from a heat-conductive material filled with a heat storage substance, which is preheated and arranged on the base of a container within which a food is placed. The heat is transferred from the substance contained in the bag to the food for the purpose of maintaining the food at a desired temperature. The bag and the container are disposable once the food is consumed. The following are proposed as examples of the mentioned substance: salt hydrates, organic compounds with and without paraffin, such as lauric acid, naphthalene, glycols, and the like. This device does not defrost or regenerate food and would not be suitable for doing so because the temperature of the pre-heated bag is relatively low and there is not complete contact and envelopment of the bag with the food.

### Disclosure of the Invention

The present invention contributes to palliate the above and other drawbacks by providing an apparatus for defrosting or regenerating frozen foods comprising a container partially filled with a solid material having a high heat absorption capacity, which is formed by a plurality of discrete elements susceptible to relative movement such that said solid material is flowable, allowing immersing the frozen food among the discrete elements and assuring an adaptation of said solid material to the shape of the frozen food by contact. The solid material is heated to a predetermined temperature within the container, and the container has an opening through which frozen food can be submerged into said solid material for allowing heat transfer from the solid material to said frozen food for defrosting or regenerating it.

The solid material is preferably a dry material capable of absorbing heat up to a temperature comprised between 150°C and 300°C without melting. In one embodiment, the discrete elements of the solid material are spherical-shaped and have a smooth surface to facilitate their relative fluid movement. The spherical-shaped discrete elements may have a diameter ranging from 0.5 to 5 mm, and preferably all of them have one and the same nominal diameter. Alternatively, the discrete elements may have a variety of shapes and textures provided that they assure a relative fluid movement between one another.

The solid material must have a high heat absorbing capacity and must be a good heat conductor, for example, the solid material can be a good heat-conductive metal material, such as steel, a ferric material, copper and alloys thereof, or aluminium and alloys thereof. Alternatively, the solid material can be a non-metal material, such as quartz, which, despite not being as conductive as the metal materials, is much lighter and practically inert, so that it is appropriate for culinary applications.

The frozen food, for example a packaged ready-to-eat prepared food, is generally contained in a hermetically-sealed packaging, made from a material resistant to the working temperature, and the solid material must preferably be adapted for transmitting heat to the frozen food through said packaging, such that the solid material will not ever come into direct contact with the food. The frozen food can also be contained in a recipient made from a material resistant to the working temperature, and the solid material, additionally or alternatively, can be adapted for transmitting heat to the frozen food through the wall of said recipient when it is partially submerged in the solid material, such as in a "water bath", such that the solid material will not come into direct contact with the food even though the recipient is open at the upper part.

Preferably, the container is associated with heating means for heating said solid material, preferably including temperature regulating means for regulating the temperature at which the solid material is heated. Although said heating means may be arranged for heating the solid material in a heating unit separated from the container, it is preferred that the heating means are arranged for heating the solid material within the container.

In one embodiment, the heating means comprise electrical resistances according to several arrangements, for example, one or more electrical resistances located outside the container and adjacent to a wall thereof, one or more electrical resistances embedded in the wall of the container, one or more electrical resistances located within the container contacting with the solid material, or combinations thereof.

Alternatively, the heating means may comprise one or more electromagnetic induction coils located outside the container and adjacent to a wall thereof, in which case the solid material must be a ferromagnetic material and the container must be made of an antimagnetic material. The heating means alternatively may also comprise gas burners, or any other heating means of those commonly used for heating food in domestic or professional kitchens. The heating means obviously may also be used for heating the solid material in a heating unit separated from the container. In any case, an outer surface of the wall of the container will preferably be covered by an insulating material to minimize energy losses.

The apparatus of the present invention preferably comprises holding means for holding the frozen food when it is introduced into the container or extracted therefrom to avoid the user's hands from coming into contact with the solid material heated at a high temperature, and the container may include a cover provided with one or more openings through which the frozen food supported on the support of the mentioned manual utensil can be introduced and extracted.

The present invention also provides a method for defrosting or regenerating frozen foods, of the type which comprises submerging a frozen food in a flowable heat-carrying material when heated at a predetermined temperature for allowing heat transfer from said heat-carrying material to said frozen food for defrosting or regenerating it. The method of the present invention is characterized in that it comprises using as said flowable heat-carrying material a solid material with a high heat absorption capacity and formed by a plurality of discrete elements susceptible to relative movement, allowing said immersion of the frozen food therein and assuring an adaptation of said solid material to the shape of the frozen food by contact.

The method comprises heating said solid material to a temperature preferably comprised between 150°C and 300°C.

### Brief Description of the Drawings

The previous and other features and advantages will be more fully understood from the following detailed description of exemplary embodiments with reference to the attached drawings, in which:
Figure 1 is a side elevation sectional view of an apparatus for defrosting or regenerating frozen foods according to a first embodiment of the present invention, with a magnified detail;
Figure 2 is a side elevation sectional view of an apparatus for defrosting or regenerating frozen foods according to a second embodiment of the present invention;
Figure 3 is a side elevation sectional view of an apparatus for defrosting or regenerating frozen foods according to a third embodiment of the present invention;
Figure 4 is a plan view of an apparatus for defrosting or regenerating frozen foods according to a fourth embodiment of the present invention;
Figure 5 is a side elevation sectional view of an apparatus for defrosting or regenerating frozen foods according to a fifth embodiment of the present invention;
Figure 6 is a side elevation sectional view of an apparatus for defrosting or regenerating frozen foods according to a sixth embodiment of the present invention; and
Figure 7 is a schematic view of an apparatus for defrosting or regenerating frozen foods according to a seventh embodiment of the present invention.

### Detailed Description of Exemplary Embodiments

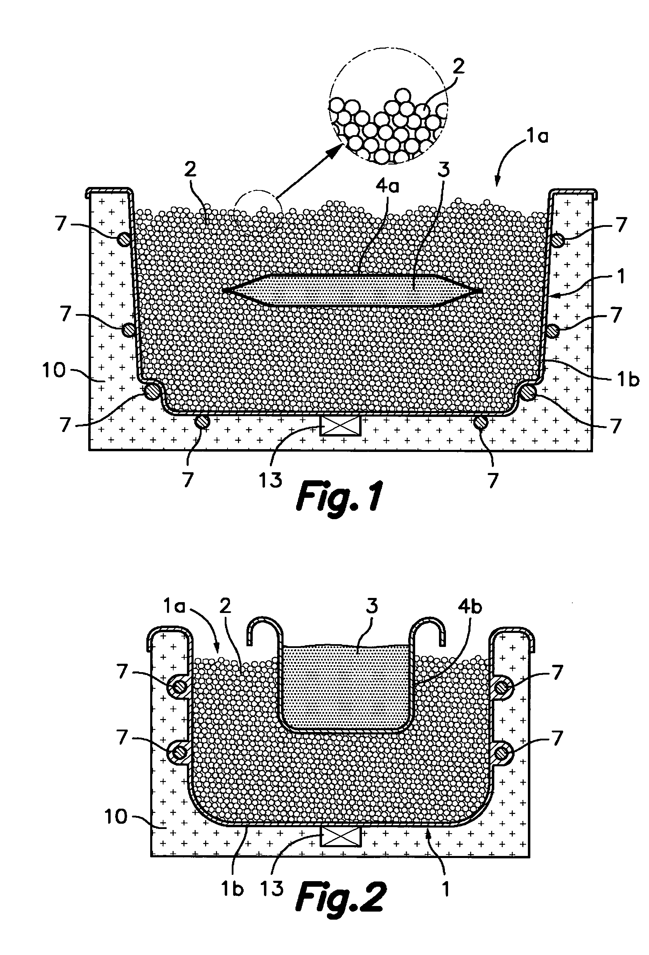

Referring first to Figure 1, there is shown an apparatus for defrosting or regenerating frozen foods according to a first embodiment of the present invention, which comprises a container 1 having a surrounding wall 1b with an upper opening 1a. Said container 1 is partially filled with a heat-carrying material in the form of a dry solid material 2 which has a high heat absorption capacity and which is formed by a plurality of discrete elements susceptible to relative movement, such that said solid material 2 is capable of flowing in a similar manner to that of a liquid and of adopting the shape of the wall 1b of the container 1.

As is better shown in the magnified detail of Figure 1, the discrete elements forming the solid material 2 are spherical-shaped and have a smooth surface, and all of them have the same nominal diameter which can range from 0.5 to 5 mm, although other shapes and sizes are possible provided that they assure the relative fluid movement of the discrete elements. The solid material 2 can be a heat-conductive metal material, such as steel, a ferric material, copper and alloys thereof, or aluminium and alloys thereof, or a non-metal material, such as quartz.

In this first embodiment, the container 1 is associated with heating means for heating the solid material 2 within the container 1. Said heating means comprise one or more electrical resistors 7 located outside the container 1 and adjacent to the wall 1b thereof. The electrical resistors 7 are controlled by temperature regulating means preferably including a thermostat 13 or the like for regulating the temperature to which the solid material 2 is heated. Preferably, the wall 1b of the container 1 is externally coated with a heat-insulating layer 10 to avoid as much as possible the heat accumulated in the solid material being dissipated to the atmosphere through the wall 1b.

When the solid material has been heated to a predetermined working temperature which is comprised between 150°C and 300°C, a frozen food 3 can be introduced into the container 1 through the opening 1a and be completely submerged in the solid material 2, as shown in Figure 1. The relative fluid movement of the discrete elements of the solid material allows immersing the frozen food 3 therein and assuring an adaptation of the solid material 2 to the shape of the frozen food 3 by contact. Thus, the heat accumulated in the solid material 2 is rapidly and efficiently transferred to the frozen food 3 for defrosting or regenerating it in a short time.

The frozen food 3 which can be, for example, a food of the so-called fifth range food products, is generally contained in a generally flexible and hermetically-sealed packaging 4a resistant to the working temperature, such that the solid material 2 is adapted for transmitting heat to the frozen food 3 through said packaging 4a.

Figure 2 shows an apparatus for defrosting or regenerating frozen foods according to a second embodiment of the present invention which is entirely similar to the apparatus of the first embodiment shown in Figure 1 except that in this embodiment the electrical resistors 7 are embedded in the wall 16 of the container 1.

The illustration of the apparatus according to the second embodiment shown in Figure 2 also serves to show an alternative way of contacting the frozen food 3 with the solid material. As can be seen in the example of Figure 2, the frozen food 3 is contained in a recipient 4b resistant to the working temperature, which is generally rigid and can optionally be opened at the upper part. In this case, the mentioned recipient 4b is partially submerged in the solid material 2, such as in a "water bath", such that the solid material 2 does not come into direct contact with the food even though the upper part of the recipient 4b is open. The solid material 2 is obviously adapted for transmitting heat to the frozen food 3 through the wall of the recipient 4b.

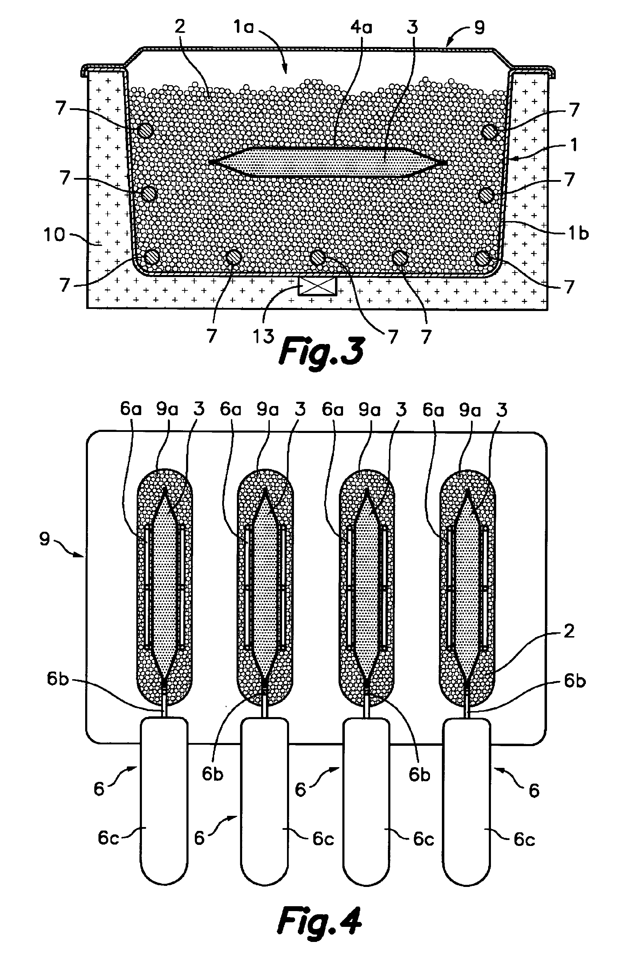

Figure 3 shows an apparatus for defrosting or regenerating frozen foods according to a third embodiment of the present invention which is entirely similar to the apparatus of the first embodiment shown in Figure 1 except that in this embodiment the electrical resistors 7 are located within the wall 1b of the container 1 and in direct contact with the solid material 2. The apparatus according to this third embodiment further includes a cover 9 that can be used for covering the container 1 when the apparatus is not being used or while the frozen food 3a is submerged in the solid material 2.

Figure 4 shows a fourth embodiment of the apparatus of the present invention which comprises a container 1 (not shown) partially filled with the solid material 2 heated to a predetermined working temperature, and holding means for holding the frozen food 3 when it is introduced into the container 1 or extracted therefrom.

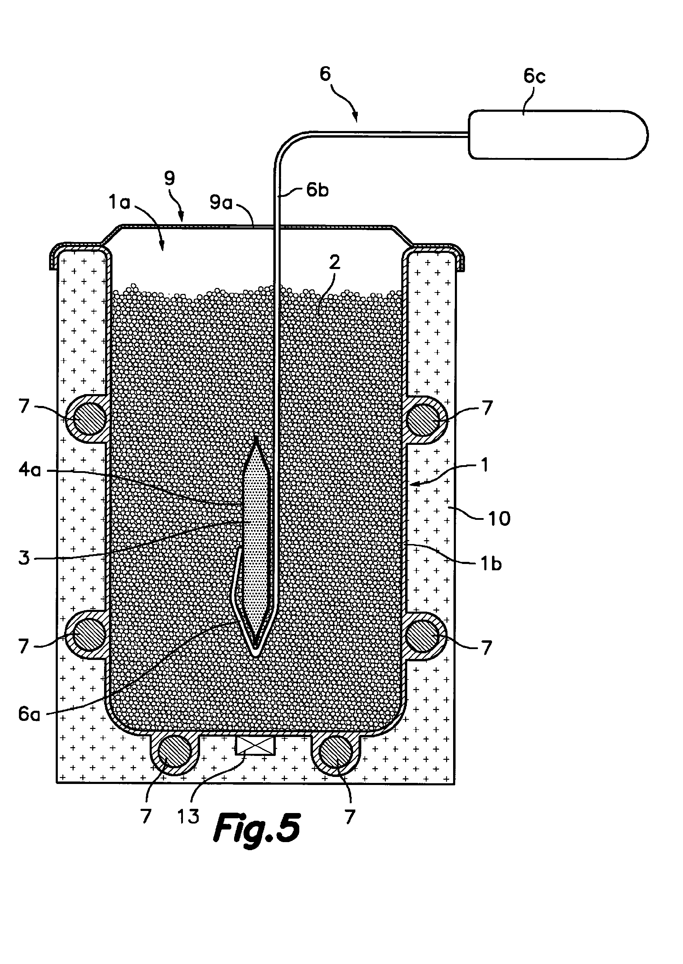

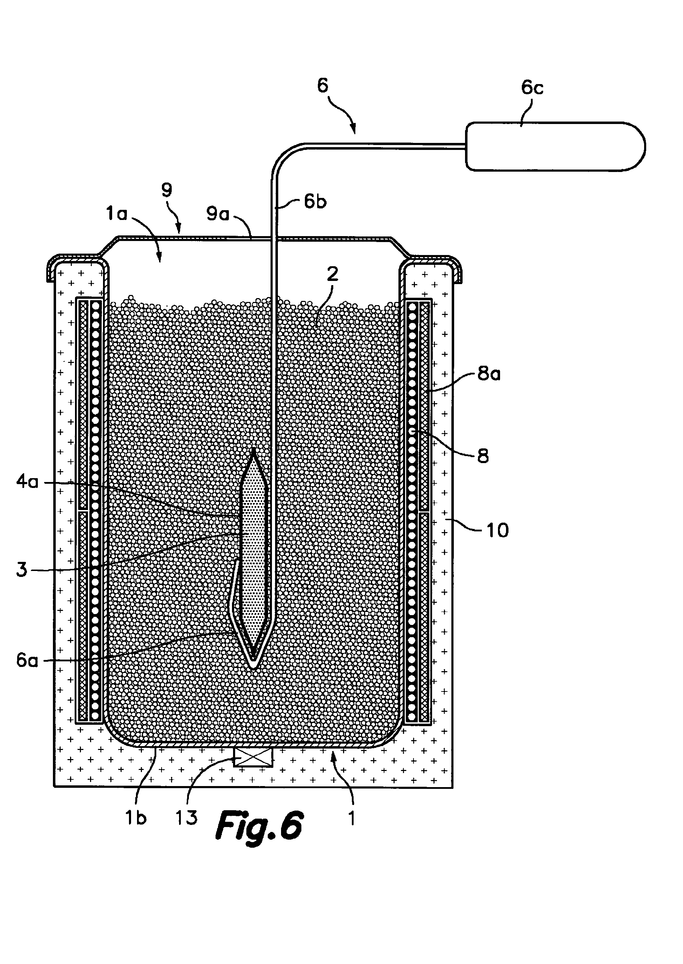

In this fourth embodiment, the mentioned holding means comprise a plurality of manual utensils 6 that are used by a user to support the frozen food 3 while it is submerged, maintained in contact with and extracted from the solid material 2, which is at a high temperature, without the user's hands coming into contact with the solid material 2. Each of said manual utensils 6 (see also Figures 5 and 6) comprises a support 6a fixed at the end of a shaft 6b provided with a heat-insulating handle 6c. The mentioned shaft 6b is long enough so as to allow the frozen food 3 supported on said support 6a to be completely submerged in the solid material 2 while said handle 6c remains outside the container 1. The support 6a is made of thin rods or similar elements to allow the discrete elements forming the solid material 2 to flow through it.

The apparatus of the fourth embodiment shown in Figure 4 optionally includes a cover 9 for covering the recipient 1 which is provided with several openings 9a through which various frozen foods 3 supported on the supports 6a of respective manual utensils 6 can be independently introduced and extracted, which avoids having to remove and replace the cover 9 every time a frozen food 3 contained in a packaging 4a is to be defrosted or regenerated.

Figure 5 shows a fifth embodiment of the apparatus of the present invention which, similarly to the apparatus of the second embodiment shown in Figure 2, has electrical resistors 7 embedded in the wall 1b of the container 1. The apparatus of this fifth embodiment includes a manual utensil 6 similar to that described above in relation to the fourth embodiment shown in Figure 4, and a cover 9 provided with an opening 9a through which the frozen food 3 supported on the support 6a of the manual utensil 6 can be introduced and extracted.

Figure 6 shows a sixth embodiment of the apparatus of the present invention which is entirely similar to the apparatus of the fifth embodiment shown in Figure 5 except that in this embodiment, instead of electrical resistors 7, the heating means comprise an electromagnetic induction coil 8 surrounding a side portion of the wall 1b of the container 1 and arranged adjacent thereto. The wall 1b of the container 1 is made of an antimagnetic material and the mentioned electromagnetic induction coil 8 has a ferrite coating 8a on its side opposite the wall 1b. In this fifth embodiment, the solid material 2 formed by discrete elements is a ferromagnetic material, such as steel or another ferric material, which is heated by the electromagnetic field generated by the electromagnetic induction coil 8. The electromagnetic induction coil 8 is controlled by temperature regulating means preferably including a thermostat 13 or the like for regulating the temperature at which the solid material 2 is heated.

It will be understood that, alternatively, the mentioned electromagnetic induction coil 8 may be a flat spiral coil and arranged below a base portion of the container 1 and adjacent thereto, or the apparatus may have a plurality of electromagnetic induction coils 8 located in different positions in relation to the wall 1b of the container 1.

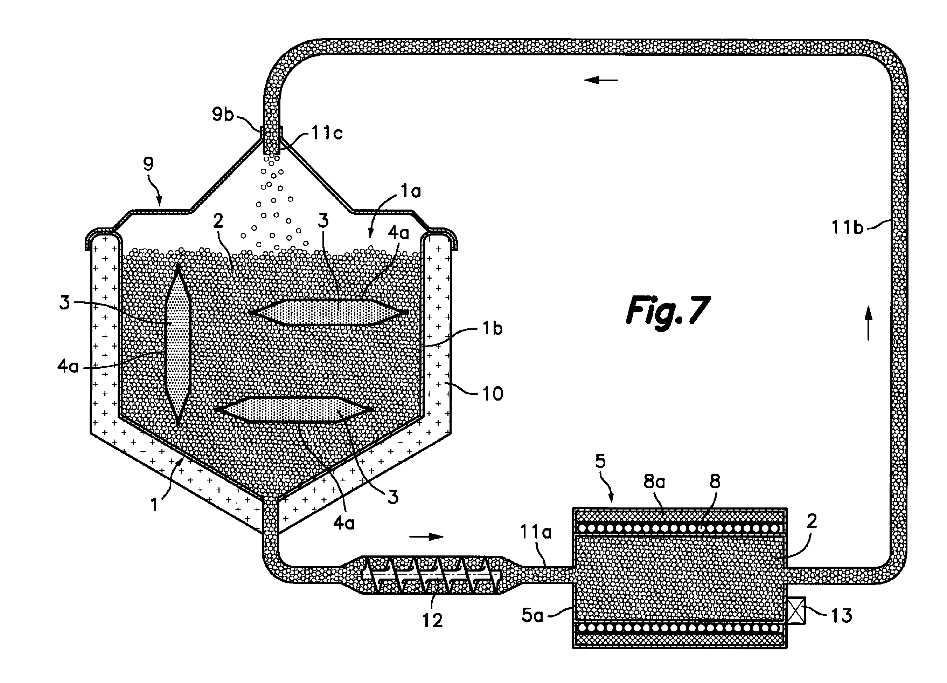

Figure 7 shows a seventh embodiment of the apparatus of the present invention in which the heating means are arranged for heating the solid material 2 in a heating unit 5 separate from the container 1 instead of heating the solid material 2 within the container 1. To that end, the apparatus further comprises recirculation means arranged to recirculate the solid material 2 from the container 1 to said heating unit 5 and from the heating unit 5 to the container 1.

The heating unit 5 comprises a wall 5a defining an enclosure with an inlet and an outlet. The mentioned wall 5a of the heating unit 5 is surrounded by heating means which, in the example illustrated, comprise an electromagnetic induction coil 8 with a ferrite coating 8a. The electromagnetic induction coil 8 is controlled by temperature regulating means preferably including a thermostat 13 or the like for regulating the temperature at which the solid material 2 is heated. Said thermostat 13 can be associated with the enclosure of the heating unit 5, as shown in Figure 7, or with the container 1.

Said recirculation means comprise a first conduit 11a connecting an outlet of the container 1 with the inlet of the enclosure of the heating unit 5, and a second conduit 11b connecting the outlet of the enclosure of the heating unit 5 with a discharge nozzle 11c arranged on the upper opening 1a of the container 1. In the mentioned first conduit 11a there is arranged a driving device, such as a worm screw 12 or any other device provided with rotating blades, driven by an electric motor (not shown) for driving the recirculation of the solid material through the mentioned recirculation means. Although it is not shown in Figure 7, it is preferable for the heating unit 5 and the first and second conduits 11a, 11b to be externally coated with a heat-insulating layer.

The apparatus of this seventh embodiment comprises a cover 9 for covering the container 1 which comprises an opening through which an end portion of the second conduit 11b or the discharge nozzle 11c is inserted. Although they have not been depicted in Figure 7, this cover 9 can also comprise openings 9a to allow the introduction and extraction of frozen foods 3 supported on supports 6a of respective manual utensils 6 in a manner similar to that described above in relation to the fourth, fifth and sixth embodiments shown in Figures 4, 5 and 6, respectively.

It will be understood that the way of contacting the frozen food 3 with the solid material 2 does not generally depend on the particular embodiment of the container 1 or on the nature of the heating means 7, 8. For example, the frozen food 3 contained in a packaging 4a resistant to the working temperature, which is completely submerged in the solid material 2 according to Figures 1, 3, 4, 5, 6 and 7 concerning the first, third, fourth, fifth, sixth and seventh embodiments, respectively, can also be used with the apparatus of the second embodiment shown in Figure 2, and the frozen food 3 contained in a recipient 4b resistant to the working temperature, which requires being partially submerged in the solid material 2 as in a water bath as shown in Figure 2, can also be used with any of the apparatuses of the first, third, fourth, fifth and sixth embodiments shown in Figures 1, 3, 4, 5 and 6, respectively, dispensing with the cover 9.

It will also be understood that the use of a cover 9 for covering the container 1 and/or the use of a manual utensil 6 for supporting the frozen food does not generally depend on the particular embodiment of the container 1 or on the nature of the heating means 7, 8. For example, the cover 9 of the apparatus of the third embodiment shown in Figure 3 can also be used with any of the containers 1 of the first, second, fifth and sixth embodiments shown in Figures 1, 2, 5 and 6, respectively. Also for example, the manual utensil 6 with or without the cover 9 of any of the fourth, fifth and sixth embodiments shown in Figures 4, 5 and 6 can also be used with any of the containers 1 of the first, second, third and seventh embodiments shown in Figures 1, 2, 3 and 7.

It will also be understood that, alternatively, instead of the electrical resistors 7 or electromagnetic induction coils 8 described in relation to the figures, the heating means for heating the solid material 2 in the container 1 or in the heating unit 5 may comprise gas burners or any other heating means commonly used for heating food in domestic or professional kitchens.

Modifications, variations and combinations based on the embodiments shown and described will readily occur to a person skilled in the art without departing from the scope of the present invention as it is defined in the attached claims.

## Claims

1. An apparatus for defrosting or regenerating frozen foods comprising a container (1) partially filled with a flowable heat-carrying material heated to a predetermined temperature, said container (1) having an opening (1a) through which a frozen food (3) is submerged into said heat-carrying material for allowing heat transfer from the heat-carrying material to said frozen food (3) for defrosting or regenerating it, **characterized in that** said heat-carrying material comprises a solid material (2) with a high heat absorption capacity and is formed by a plurality of discrete elements susceptible to relative movement, allowing immersing the frozen food (3) therein and assuring an adaptation of said solid material (2) to the shape of the frozen food (3) by contact.

2. The apparatus according to claim 1, **characterized in that** said solid material (2) is a dry material capable of absorbing heat up to a temperature comprised between 150°C and 300°C without melting.

3. The apparatus according to claim 1, **characterized in that** said discrete elements of the solid material (2) are spherical-shaped and have a smooth surface.

4. The apparatus according to claim 3, **characterized in that** said discrete spherical-shaped elements have a diameter ranging from 0.5 to 5 mm.

5. The apparatus according to any one of the preceding claims, **characterized in that** said solid material (2) is a heat-conductive metal material selected from a group comprising steel, ferric material, copper and alloys thereof, and aluminium and alloys thereof.

6. The apparatus according to any one of claims 1 to 4, **characterized in that** said solid material (2) is quartz.

7. The apparatus according to claim 1, **characterized in that** said container (1) is associated with heating means for heating said solid material (2).

8. The apparatus according to claim 7, **characterized in that** said heating means comprise one or more electrical resistances (7) arranged for heating the solid material (2) within the container (1).

9. The apparatus according to claim 7, **characterized in that** said heating means comprise one or more electromagnetic induction coils (8) and **in that** the solid material (2) is ferromagnetic and the container (1) is antimagnetic.

10. The apparatus according to claim 1, **characterized in that** it further comprises holding means for holding the frozen food (3) when it is introduced into the container (1) or extracted therefrom.

11. The apparatus according to claim 10, **characterized in that** said holding means comprise a manual utensil (6) which includes a support (6a) fixed at the end of a shaft (6b) provided with a heat-insulating handle (6c), said shaft (6b) being long enough so as to allow the frozen food (3) supported on said support (6a) to be completely submerged in the solid material (2) while said handle (6c) remains outside the container (1).

12. The apparatus according to claim 11, **characterized in that** the container (1) includes a cover (9) provided with one or more openings (9a) through which the frozen food (3) supported on the support (6a) of said manual utensil (6) can be introduced and extracted.

13. A method for defrosting or regenerating frozen food which comprises submerging a frozen food (3) in a flowable heat-carrying material when heated at a predetermined temperature for allowing heat transfer from said heat-carrying material to said frozen food (3) for defrosting or regenerating it, **characterized in that** it comprises using as said flowable heat-carrying material a solid material (2) with a high heat absorption capacity and formed by a plurality of discrete elements susceptible to relative movement, allowing said immersion of the frozen food (3) therein and assuring an adaptation of said solid material (2) to the shape of the frozen food (3) by contact.

14. The method according to claim 13, **characterized in that** it comprises heating said solid material (2) to a temperature comprised between 150°C and 300°C.

15. The method according to claim 13 or 14, **characterized in that** it comprises transmitting heat from said solid material (2) to the frozen food (3) through a packaging (4a) or a recipient (4b) containing the frozen food (3), said packaging (4a) or recipient (4b) being resistant to the working temperature of the solid material (2).
